# EUROPÄISCHE PATENTSCHRIFT

(11) **EP 1 314 972 B1**
(45) Veröffentlichungstag und Bekanntmachung des Hinweises auf die Patenterteilung: **14.07.2010**
(21) Anmeldenummer: 01127427.1
(22) Anmeldetag: 26.11.2001
(51) Int. Cl.: G01N 21/25

(54) **Spektralphotometer und Verwendung desselben**
Spectrophotometer and its use
Spectrophotomètre et son utilisation

(43) Veröffentlichungstag der Anmeldung: 28.05.2003
(73) Patentinhaber: X-Rite Europe GmbH, 8105 Regensdorf (CH)
(72) Erfinder: Ehbets, Peter, 8046 Zürich (CH)
(74) Vertreter: Schwabe - Sandmair - Marx

(56) Entgegenhaltungen:
- EP-A- 0 144 188
- EP-A- 1 072 884
- WO-A-00/40935
- WO-A-01/29542
- US-A- 4 969 037
- US-A- 6 147 761
- FLETCHER R: "HIGH EFFICIENCY" OPTICS AND PHOTONICS NEWS, OPTICAL SOCIETY OF AMERICA, WASHINGTON, DC, US, Bd. 10, Nr. 4, April 1999 (1999-04), Seiten 18-23, XP000949867 ISSN: 1047-6938

## Beschreibung

Die Erfindung betrifft ein Spektralphotometer gemäss dem Oberbegriff des unabhängigen Anspruchs sowie die Verwendung bzw. den Einsatz eines solchen Spektralphotometers.

In modernen digitalen Arbeitsabläufen für die Reproduktion von farbigen Dokumenten, Bildern und Verpackungen nimmt das Desktop Publishing und das Color Management einen immer wichtigeren Stellenwert ein. Im Desktop Publishing erarbeitet der Designer auf seinem Computer in elektronischer Form heute nicht nur das graphische Konzept und die Farbgestaltung, sondern spezifiziert auch immer mehr reproduktionstechnische Parameter betreffend der letztendlichen Herstellung und Vervielfältigung des Dokuments, wie z. B. das Druckverfahren, die Papierqualität oder Spezialfarben. Da Testdrucke teuer und zeitaufwendig sind, ist es für diese Anwendung erwünscht, dass der Designer die Farbwiedergabeeigenschaften seines elektronischen Entwurfs gemäss einem speziellen Druckprozess simulieren und prüfen kann.

Die Kommunikation und Reproduktion von konsistenten Farben werden durch den Einsatz von Color Management Technologien ermöglicht. In einem Color Management System (CMS) werden die am Workflow beteiligten Ein- und Ausgabesysteme durch den Einsatz von Farbmessgeräten farbmetrisch kalibriert und charakterisiert. Der Zusammenhang zwischen absoluten Farbmesswerten und systemspezifischen Farbsteuersignalen wird in sogenannten Geräteprofilen gespeichert. Durch die Kombination von Geräteprofilen kann Farbinformation medien- und systemübergreifend kommuniziert und reproduziert werden.

Der Aufbau bestehender Color Management Systeme ist vom ICC (International Color Council) normiert und beschrieben worden (siehe z.B. http://www.imaging.org für die neueste Version des ICC Standards ) und ist auch in der von der Firma Logo GmbH, einer Gesellschaft der GretagMacbeth Gruppe, im August 1999 herausgegebenen Publikation "Postscriptum on Color Management, Philosophy and Technology of Color Management" der Autoren Stefan Brües, Liane May und Dietmar Fuchs zusammengefasst.

Durch den Einsatz von Color Management und Geräteprofilen erhält der Designer die Möglichkeit, die Farbwiedergabe von verschiedenen Druckverfahren auf seinem Bildschirm zu visualisieren oder mit einem digitalen Drucker zu simulieren. Allerdings sind die Möglichkeiten und die Genauigkeit solcher digitalen Prüfmethoden zur Zeit beschränkt. Schwierigkeiten für eine korrekte Visualisierung bereiten material- oder prozessspezifische Parameter, welche die visuelle Farbwahrnehmung beeinflussen, aber mit den aktuell verwendeten Farbmessgeräten nicht oder nur schlecht erfasst werden. Typische Beispiele sind Substratmaterialien mit unterschiedlichen Oberflächeneigenschaften, optischen Aufhellern oder fluoreszierende Farben.

Proben von gleicher Farbe aber mit unterschiedlichen Oberflächeneigenschaften sehen unterschiedlich aus. Eine Probe mit einer glänzenden Oberfläche wird dunkler und farblich gesättigter wahrgenommen als mit einer diffus reflektierenden Oberfläche.

Die Wirkung von optischen Aufhellern und fluoreszierenden Farben hängt stark vom Beleuchtungsspektrum ab. Für eine korrekte Bewertung muss die Lichtquelle im Messgerät an die reellen Betrachtungsbedingungen angepasst werden können.

Von steigender Bedeutung für Verpackungen und Werbung sind auch auf Metallicaoder Perlglanzpigmenten basierende, sogenannte Effektfarbschichten. Diese zeichnen sich dadurch aus, dass sie starke beleuchtungs- oder betrachtungswinkelabhänge Reflektionseigenschaften aufweisen. Eine Beschreibung von Effektfarbschichten ist zum Beispiel in den Artikeln "Pigmente - Farbmittel und Funktionsträger" von C. D. Eschenbach und "Perlglanzpigmente" von G. Pfaff im Spektrum der Wissenschaft, Oktober 1997, S.94-99 und S. 99-104 gegeben. Solche winkelabhängigen Spezialeffekte können zur Zeit nicht innerhalb eines Color Management Systems erfasst werden.

Auch bei bedruckten metallisch glänzenden Substratmaterialien oder Folien tritt ein starker winkelabhängiger Oberflächenglanz auf, welcher für eine korrekte Darstellung messtechnisch erfasst werden muss.

Für die Anwendung als Einbausensor muss ein Messsystem folgende Grundanforderungen erfüllen: Es muss schnelle Messzyklen erlauben, eine kompakte Bauform und geringes Gewicht aufweisen, robust sein und eine lange Lebensdauer aufweisen, und es muss möglichst wartungsfrei sein. Ausserdem muss ein Messsystem, um im online oder inline Betrieb in einem automatisierten System eingesetzt werden zu können, eine kontaktlose Messgeometrie zur Probe ermöglichen.

Für Color Management Anwendungen im graphischen Bereich werden heutzutage Farbmessgeräte mit 45°/0° oder 0°/45° Messgeometrie eingesetzt, welche in kompakter Bauweise realisiert sind. Als typisches Beispiel sei das Spektralphotometer "Spectrolino" der Firma Gretag-Macbeth AG und die EP-A 1 067 369 angeführt. Die verwendete Messtechnik basiert auf einer Glühlampe als Beleuchtungsquelle und einem Diodenzeilen-Gitter-Spektrometer für die spektrale Auswertung im Messkanal. Das "Spectrolino" Spektralphotometer kann als Messkopf auf einen xy-Verschiebetisch, z.B. den Typ "SpectroScan" der Firma Gretag-Macbeth AG aufgesteckt werden, was das automatisierte Ausmessen einer grossen Anzahl von Farbproben für die Erstellung eines Drucker-Geräteprofils ermöglicht.

Die im "Spectrolino" verwendete Messtechnik ist aus verschiedenen Gründen nicht für den Einsatz als Einbausensor geeignet. Die Glühlampe hat eine begrenzte Lebensdauer. Das Messsystem muss deshalb speziell für einen einfachen Lampenwechsel ausgelegt sein. Die Wendel der Glühlampe ist empfindlich auf Vibrationen, was beim Einbau in motorisierte Systeme Schwierigkeiten bereitet. Das Messsystem ist auch empfindlich auf Distanzschwankungen zwischen Probe und Messoptik. Deshalb wird bei diesen Geräten in direktem mechanischem Kontakt mit der Probe gemessen.

Der Einsatz eines Farbmessgeräts mit 45°/0° Messgeometrie in digitalen Drucksystemen für Color Management Anwendungen ist z.B. in der DE-C 197 22 073 beschrieben.

Winkelabhängige Reflektionseigenschaften können mit der 45°/0° Geometrie nicht erfasst werden. Für die Bewertung von Materialparametern, wie Oberflächeneffekt und Fluoreszenzanregung von optischen Aufhellern, können in dieser Geometrie bekannte Verfahren mit zusätzlich im Beleuchtungs- und Messkanal einschwenkbaren optischen Filtern angewandt werden. Für die Elimination des Oberflächeneffekts kann eine Messung mit gekreuzten linearen Polarisationsfiltern und für die Fluoreszenzanregung können Lichtartkonversionsfilter eingesetzt werden. Für automatisierte Messsysteme muss diese Funktionalität mit mechanisch bewegten Baugruppen, zum Beispiel mit einem Filterrad wie im Spektralphotometer "SpectroEye" der Firma Gretag-Macbeth AG realisiert werden. Bewegte mechanischen Komponenten sind für kompakte Sensorsystem nicht geeignet.

Alternative Techniken in kombinierten Messgeräten für Farb- und Oberflächeneigenschaften basieren auf einer diffusen Messgeometrie mit einer Ulbrichtskugel oder dem Einsatz einer Glanzmessung.

In der diffusen Messgeometrie kann eine Glanzfalle in der Ulbrichtskugel eingebaut werden, welche von der Probenoberfläche gerichtet reflektiertes Licht im Messkanal eliminiert. Eine vorteilhafte Auslegung dieses Messprinzips ist beispielsweise in der EP-A 0 964 244 beschrieben. Allerdings muss die diffuse Messgeometrie per definitionem in direktem Kontakt zur Messprobe realisiert werden. Die Messgeometrie mit der Ulbrichtskugel eignet sich nicht für die Miniaturisierung, und die Herstellung einer gut reflektierenden Ulbrichtskugel ist aufwendig. Ausserdem ist die Geometrie mit der Ulbrichtskugel nicht direkt für die Fluoreszenzmessung anwendbar und muss speziell geeicht werden.

In Glanzmessgeräten wird mit einer schmalbandigen Lichtquelle die Probe gerichtet beleuchtet und mit einem Detektor der Anteil des von der Oberfläche direkt gerichtet reflektierten Lichts gemessen. Aus dem Messwert wird ein für die Oberfläche charakteristischer Glanzgrad bestimmt. Dieser Glanzgrad repräsentiert die Oberflächenqualität, aber nicht direkt die visuelle Farbwahrnehmung und ist so für Visualiserungsanwendungen im Color Management Bereich nicht geeignet. Kombinierte Farbmessgeräte mit 45°/0° Messgeometrie und integrierter Glanzmessung sind in USA 5 377 000 und US-A 4 886 355 beschrieben. Ein kommerzielles Produkt mit dieser Funktionalität ist von der Firma BYK-Gardner unter der Bezeichnung "Color-Guide Gloss" erhältlich.

Verschiedene Hersteller bieten Multi-Winkel-Spektralphotometer für die Farbmesstechnik an. Als typische Beispiele können die Geräte "MA68IL" der Firma Xrite, "CM512m3" der Firma Minolta sowie "CE640" und "CE740" der Firma Gretag-Macbeth AG genannt werden. Diese Geräte sind teilweise zwar tragbar, weisen aber eine komplexe mechanische Bauform auf und müssen für die Messung mechanisch auf die Probe aufgelegt werden. Diese Systeme sind u.a. auch wegen ihrer Grösse nicht als Einbausensor einsetzbar.

Die US 6,147,761 A beschreibt einen Sensor zur Messung von reflektierenden, lichtdurchlässigen oder selbstleuchtenden Vorlagen mit Hilfe eines Fotodetektors. Dabei werden durch eine elektronische Schaltung Leuchtdioden (LEDs) einzeln angesteuert, um das Licht der Leuchtdiode durch jeweils einen Hohlraum auf die Vorlage zu leiten und um von dort reflektiert und von einem Fotodetektor empfangen zu werden. Weiterhin werden bei dieser Messanordnung mehrere Messungen einer bestimmten Wellenlänge gemessen und anschließend zusammengefügt.

Die EP 1 072 884 A beschreibt eine Ringbeleuchtung.

Die EP 1 067 369 A beschreibt eine Lichtmessvorrichtung, das heißt ein Spektralfotometer, das ein mit der Sammelanordnung optisch verbundenes Spektrometer zur Zerlegung des von der Sammelanordnung erfassten Messlichtes in seine spektralen Anteile aufweist.

Die EP 0 375 317 A beschreibt ein transportierbares Kolorimeter zur Charakterisierung einer farbigen Oberfläche.

Die WO 00/40935 beschreibt Referenzlichtmessungen. Die DE 199 62 779 A beschreibt eine Vorrichtung und ein Verfahren zur Bestimmung der Qualität von Oberflächen. Die EP 1 150 154 A beschreibt eine Anordnung und ein Verfahren zur ringförmigen Beleuchtung, insbesondere zur Auflichtbeleuchtung bei Mikroskopen. Die WO 01/29542 A beschreibt einen Beleuchtungskopf mit einem ringförmigen Träger, der fünf Beleuchtungsabschnitte aufweist, um Ziele zu beleuchten, und um Bilder aufzunehmen, um die Ziele zu inspizieren, wobei ein Bildprozessor bereitgestellt wird, um Farbbilder zu erhalten, obwohl eine Monochrom-. Kamera verwendet wird.

Ausgehend von diesem Stand der Technik soll durch die vorliegende Erfindung nun ein speziell für Color Management Anwendungen ausgelegtes Spektralphotometer geschaffen werden, welches die vorgenannten Grundanforderungen erfüllt und bei kompakter Bauweise einen vielseitigen Einsatz an allen an einem Color Management System beteiligten Ein- und Ausgabemedien ermöglicht und insbesondere auch als Einbaugerät oder Messsensor in automatisierten Farbmesssystemen oder direkt in Farbdrucksystemen eingesetzt werden kann. Speziell soll das Spektralphotometer zur Messung sowohl von Farbe als auch von Material- und Farbreproduktionseigenschaften und Effektfarbschichten geeignet sein und erlauben, aus den Messresultaten Geräteprofile der unterschiedlichsten Art zu bilden und so eine genaue Visualisierung der Farbreproduktionseigenschaften eines Herstellungsprozesses zu ermöglichen.

Die Lösung dieser der Erfindung zugrundeliegenden Aufgaben ergibt sich durch das erfindungsgemässe Spektralphotometer gemäss den kennzeichnenden Merkmalen des unabhängigen Anspruchs. Besonders zweckmässige und vorteilhafte Ausgestaltungen sind Gegenstand der abhängigen Ansprüche.

Im folgenden wird die Erfindung anhand der Zeichnung näher erläutert. Es zeigen:
- Fig. 1: einen Axialschnitt durch ein erstes Ausführungsbeispiel des erfindungsgemässen Spektralphotometers nach der Linie I-I der Fig. 3,
- Fig. 2: einen Axialschnitt nach der Linie II-II der Figur 3,
- Fig. 3: einen Querschnitt nach der Linie III-III der Fig. 1,
- Fig. 4: ein Prinzipschema der elektronischen Komponenten des erfindungsgemässen Spektralphotometers,
- Fig. 5: einen Axialschnitt analog Fig. 1 durch ein zweites Ausführungsbeispiel des erfindungsgemässen Spektralphotometers,
- Fig. 6: einen Querschnitt analog Fig. 3 nach der Linie VI-VI der Fig. 5,
- Fig. 7: eine Prinzipskizze zur Erläuterung einer ersten Variante einer integrierten Abstandsmessung und
- Fig. 8-9: zwei Prinzipskizzen zur Erläuterung einer zweiten Variante einer integrierten Abstandsmessung.

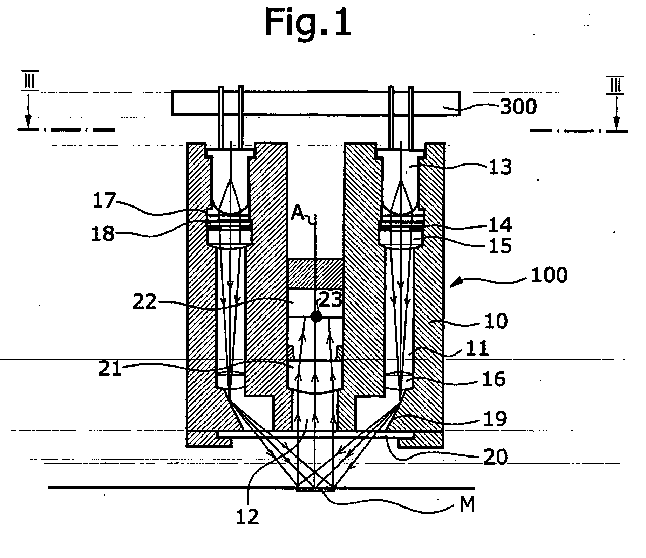

Der prinzipielle Aufbau des auf eine 45°/0°-Messgeometrie ausgelegten Spektralphotometers ist in den Figuren 1-3 dargestellt. Das Spektralphotometer enthält dabei eine Beleuchtungsanordnung mit einer spektral im wesentlichen kontinuierlichen, mehrere Einzellichtquellen umfassenden Beleuchtungslichtquelle und optischen Mitteln, um das von den Einzellichtquellen ausgehende Licht separat auf die auszumessende Probe zu lenken, eine Sammelanordnung zur Erfassung des von einem Messfleck der Probe ausgehenden Messlichts, ein Spektrometer (spektralen Analysator) zur Zerlegung des erfassten Messlichts in seine spektralen Anteile und eine elektronische Schaltung zur Steuerung sowie zur Signalverarbeitung.

Im einzelnen umfasst das Spektralphotometer einen optischen Messkopf 100, ein Spektrometer 200 und eine Leiterplatte 300, welche den Messkopf und das Spektrometer mechanisch und elektrisch verbindet und die gesamte elektronische Schaltung für die Ansteuerung des Messkopfs und des Spektrometers enthält.

Der Messkopf 100 umfasst ein äusserlich im wesentlichen zylindrisches Gehäuse 10, in welchem rund um die optische Achse A gleichmässig verteilt mehrere, im gezeigten Beispiel sechs durchgehende Beleuchtungskanäle 11 angeordnet sind. Ferner ist im Messkopf 100 axial ein (in der Zeichnung) nach unten offener Sammelkanal 12 vorgesehen. Die sechs Beleuchtungskanäle 11 und der Sammelkanal 12 sind an ihrem (in der Zeichnung) unteren Ende durch eine transparente Scheibe 20 abgedeckt und so vor Verschmutzung geschützt. Das Gehäuse 10 des Messkopfs 100 ist so ausgelegt, dass die Scheibe 20 leicht erreichbar ist und gereinigt werden kann.

In jedem Beleuchtungskanal 11 befindet sich am (in der Zeichnung) oberen Ende eine als Leuchtdiode (LED) ausgebildete Lichtquelle 13, welche elektrisch an der Leiterplatte 300 montiert ist. Ferner befinden sich in jedem Beleuchtungskanal 11 je eine Feldblende 14, eine Kondensorlinse 15, eine Abbildungslinse 16, eine Streuscheibe 17, ein oder mehrere Filter 18 und ein Umlenkspiegel 19. Die genannten optischen Komponenten 13-19 sind so bemessen und angeordnet, dass jede LED-Lichtquelle 13 einen unterhalb des Messkopfs 100 befindlichen koaxialen Messfleck M des Messobjekts unter einem Beleuchtungswinkel von im wesentlichen 45° beleuchtet. Die Streuscheiben 17 und/oder die Filter 18 können je nach Art der verwendeten Leuchtdioden 13 bzw. Einsatzzweck des Spektralphotometers auch entfallen. Die (hier sechs) als LED implementierten Lichtquellen 13 bilden zusammen eine spektral im wesentlichen kontinuierliche Beleuchtungslichtquelle.

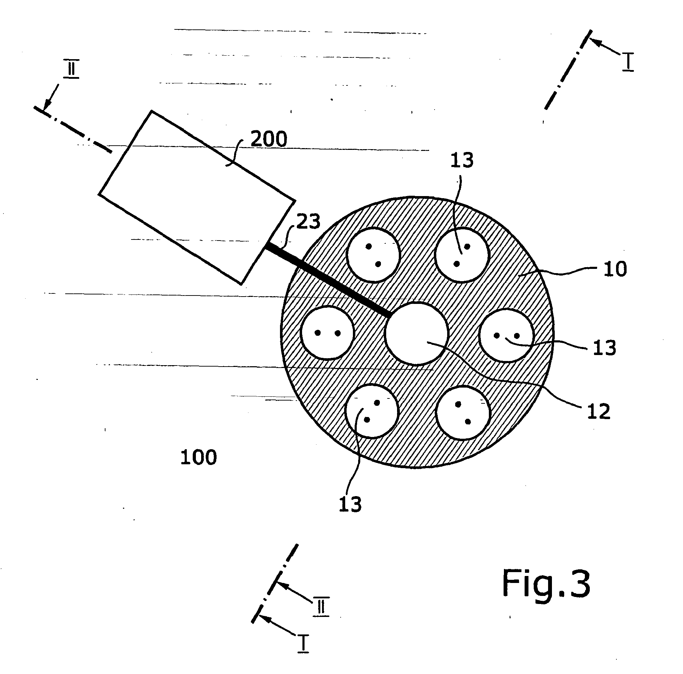

Im Sammelkanal 12 befindet sich eine Sammellinse 21 und ein Umlenkspiegel 22. Diese beiden Komponenten sammeln das vom Messfleck M remittierte oder emittierte Messlicht unter einem Beobachtungswinkel von im wesentlichen 0° und koppeln es in eine seitlich aus dem Messkopf herausführende Lichtleitfaser 23 ein. Diese leitet das aufgefangene Messlicht in das Spektrometer 200, wo es in an sich bekannter Weise in seine spektralen Anteile zerlegt wird. Das Spektrometer 200 ist z.B. gemäss EP-A 1 041 372 aufgebaut und enthält als dispersierendes optisches Element ein Beugungsgitter 201 und als Lichtsensor eine Diodenzeilenanordnung 202, wobei letztere vorzugsweise so angeordnet ist, dass sie direkt auf der Leiterplatte 300 montiert ist (Fig. 3). Die Diodenzeilenanordnung 202 erzeugt in an sich bekannter Weise elektrische Signale, die den spektralen Anteilen des empfangenen Messlichts entsprechen.

Das verwendete Messprinzip des erfindungsgemässen Spektralphotometers beruht auf dem an sich bekannten Konzept einer (spektral) kontinuierlichen Lichtquelle und einem Sammelkanal mit einem angeschlossenen spektralen Analysator (Spektrometer). Dieses Messprinzip ermöglicht gleichzeitig hohe spektrale Auflösung und schnelle Messzyklen. Das Messprinzip kann in an sich bekannter Weise gleichzeitig für Remissionsmessungen mit der im Messkopf angeordneten Beleuchtung und für Emissionsmessungen an Selbstleuchtern verwendet werden.

Für die Realisierung der kontinuierlichen Lichtquelle werden gemäss einem wesentlichen Aspekt der Erfindung weisse, über den gesamten sichtbaren Spektralbereich abstrahlende Halbleiterlumineszenzdioden (LED) 13 verwendet. Solche weissen LEDs sind seit kurzem von verschiedenen Herstellern kommerziell erhältlich. Diese LEDs erzeugen das weisse kontinuierliche Beleuchtungsspektrum mittels Lumineszenz-Konversion. Sie sind aus einem LED Chip aufgebaut, welcher Licht im blauen, violetten oder UV Spektralbereich emittiert. Zusätzlich werden im LED-Gehäuse fluoreszierende Pigmentschichten verwendet, welche durch das vom LED Chip abgestrahlten Licht optisch angeregt werden und Licht einer grösseren Wellenlänge reemittieren. Der Aufbau und die Funktionsweise weisser Lumineszenz-LEDs sind zum Beispiel in der Publikation "White Light Emitting Diodes" von J. Bauer, P. Schlotter, und J. Schneider in R. Helbig (Ed.) Festkörperprobleme, Bd. 37, Braunschweig: Vieweg, 1998, S. 67-78 beschrieben.

Weisse LEDs bieten gegenüber konventionellen breitbandigen Lichtquellen, wie Glüh- oder Blitzlampen, grundlegende Vorteile in Spektralphotometern.

LEDs haben eine lange Lebensdauer von typischerweise 50'000 Stunden, so dass das Messsystem einfach ohne auswechselbare Beleuchtungseinheit aufgebaut werden kann. Weisse LEDs erzeugen ein auf den sichtbaren Spektralbereich begrenztes Spektrum. Aus diesem Grund müssen im Sammelkanal keine zusätzlichen Bandbegrenzungsfilter für eine spektrale Messung mit einem Gitter-Spektrometer eingebaut werden. LEDs haben einen guten Wirkungsgrad, so dass sie mit geringer elektrischer Leistung betrieben werden können und wenig Wärme erzeugen. Ausserdem können LEDs kurz gepulst betrieben werden.

Diese Tatsachen ermöglichen die Realisierung neuartiger kompakter Multifunktionsbeleuchtungsoptiken für spektralphotometrische Sensorsysteme. Wegen der geringen Wärmeentwicklung können mehrere LED Chips auf kleinem Raum in geschlossenen Gehäusen eingebaut werden. Die Kombination mehrerer Lichtquellen ermöglicht hohe Lichtintensitäten im Messfeld. Ausserdem können mit mehreren LEDs mehrkanalige Beleuchtungssysteme realisiert werden.

Wegen der geringen Wärmeentwicklung sind LEDs auch ideale Lichtquellen für die Kombination mit Kunststoffoptik. Optische Komponenten aus Kunststoff können in unmittelbarer Nähe zur Lichtquelle plaziert oder sogar mit der Lichtquelle fest verbunden werden. Dies ermöglicht kompakte Bauform, geringes Gewicht und niedrige Herstellungskosten. Zusätzlich können direkt in den Kunststoffkomponenten mechanische Positionierungshilfen für die LED-Lichtquellen integriert werden. Dies ermöglicht bei der Herstellung eine einfache Montage ohne aktive Justierung der Lichtquelle gegenüber der Beleuchtungsoptik.

In der vorteilhaften Realisierung der Figuren 1-3 sind die elektronische Schaltung und die LED-Lichtquellen 13 auf einer gemeinsame Leiterplatte 300 montiert. Die LEDs werden in Standardgehäusen eingesetzt. Um hohe Lichtintensitäten im Messfeld M zu erreichen, ist die Beleuchtung aus mehreren LED-Lichtquellen gebildet, welche im Messkopf 100 bzw. auf der Leiterplatte 300 ringförmig und konzentrisch gegenüber dem Sammelkanal 12 angeordnet sind.

In den Beleuchtungskanälen 11 im Gehäuse 10 des Messkopfs 100 sind mechanische Positionierstrukturen für die LED-Lichtquelle vorgesehen, so dass die LEDs bei der Montage einfach eingesteckt werden können und nicht mehr justiert werden müssen.

Das Beleuchtungssystem realisiert für jede LED 13 ein zweistufiges Abbildungssystem. Das Licht jeder einzelnen LED 13 wird zuerst durch den (optionalen) Filter 18 geführt. Dieser Filter 18 dient dazu, das Emissionsspektrum der LED 13 für die gewünschte Anwendung optimal anzupassen, z.B. um im Detektor 202 des Spektrometers 200 ein konstantes elektrisches Messsignal über den spektralen Messbereich zu erreichen. Die im Strahlengang nach der LED-Lichtquelle 13 angeordnete Streuscheibe 17 mischt die Lichtstrahlen winkelmässig, da die Abstrahlcharakteristik einer weissen LED spektral nicht konstant ist.

Die Feldblende 14 limitiert die räumliche Ausdehnung des Beleuchtungsflecks im Messfeld M. Die erste Kondensorlinse 15 erfasst das Licht der Lichtquelle 13 und erzeugt ein Zwischenbild der Lichtquelle. Ein zweites Abbildungssystem bestehend aus der Kombination von Abbildungslinse 16 und Umlenkspiegel 19 erzeugt dann im Messfeld M unter einem bestimmten Einfallswinkel (hier 45°) einen begrenzten Beleuchtungsfleck.

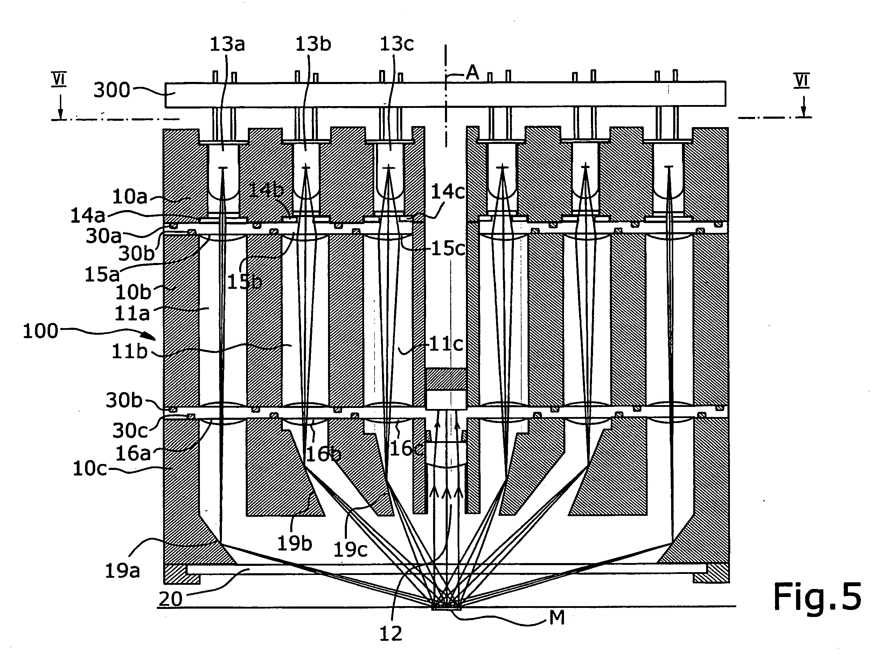

In einer vorteilhaften Ausgestaltung werden, wie im Zusammenhang mit Figur 5 näher erläutert, die optischen Komponenten im Beleuchtungssystem (Kondensorlinse 15, Abbildungslinse 16) aus integralen ringförmigen Kunststoffkomponenten gebildet, welche gleichzeitig alle Linsen der einzelnen Beleuchtungskanäle integrieren. Dies reduziert die Herstellungskosten und vereinfacht die Montage.

In der Auslegung gemäss Fig. 1-3 fokusiert die Sammellinse 21 das Licht auf die optische Lichtleitfaser 23, welche im Brennpunkt der Sammellinse 21 angeordnet ist. Die optische Faser führt das Messlicht zum Spektrometer 200. Die Einkopplung in das Spektrometer 200 kann auch direkt über einen Eintrittsspalt ohne Lichtleitfaser realisiert werden. In einer besonders vorteilhaften Ausgestaltung ist das Spektrometer wie in der EP-A 1 041 372 als Kunststoff-Diodenzeilen-Gitterspektrometer realisiert.

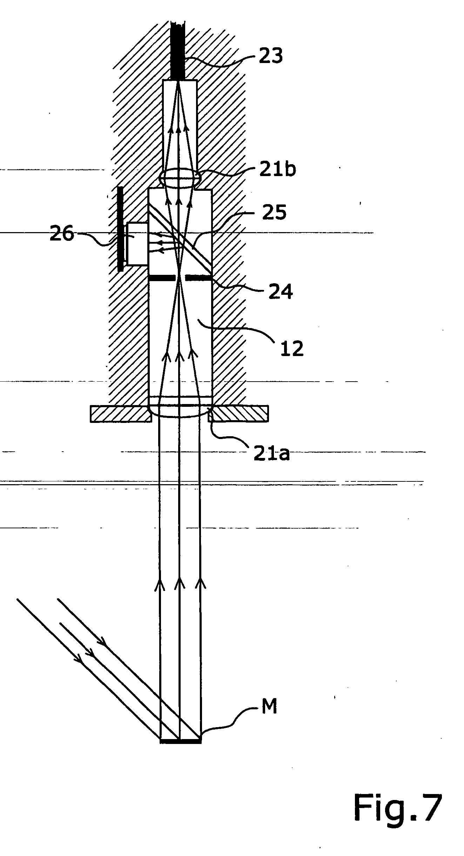

Um eine grosse Tiefenschärfe zu erhalten, ist der Sammelkanal 12 vorzugsweise als telezentrisches Abbildungssystem ausgelegt (siehe Fig. 7). Dabei wird das Messfeld von einer ersten Linse 21a in telezentrischer Anordnung scharf abgebildet. In der Bildebene ist eine Blende 24 angebracht, welche das Messfeld scharf begrenzt. Ein zweites Linsensystem 21b koppelt dann das Licht in das Spektrometer ein. Die Einkopplung in das Spektrometer kann auch hierbei direkt über einen Eintrittsspalt oder mittels einer optischen Faser 23 realisiert werden.

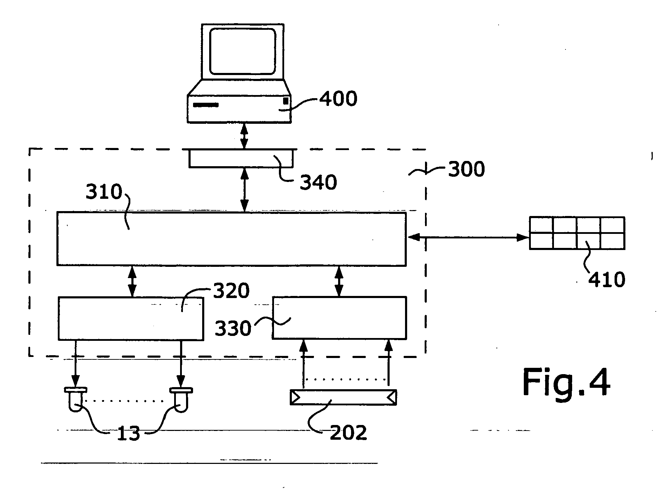

Die auf der Leiterplatte 300 befindliche elektronische Schaltung umfasst, wie die Figur 4 zeigt, eine rechnergestützte Steuerung 310, eine Treiberstufe 320 für die sektive Ansteuerung aller LED-Lichtquellen 13, eine Treiberstufe 330 für die Ansteuerung der Diodenzeilenanordnung 202 und eine Schnittstelle 340 zur Kommunikation mit einem externen Rechner 400. Optional sind noch Bedienungsorgane (z.B. Tasten) 410 zur Kommunikation mit der Steuerung 310 vorgesehen. Die elektronische Schaltung des Spektralphotometers ist soweit im wesentlichen konventionell aufgebaut und steuert in ebenfalls an sich bekannter Weise den Messablauf, wobei die ermittelten Messwerte über die Schnittstelle 340 an den externen Rechner kommuniziert werden. Der externe Rechner kann wie an sich bekannt auch den Messablauf steuern. Die elektronische Schaltung regelt insbesondere auch den Betrieb der LED Lichtquellen 13. Die Lichtemission der LEDs 13 wird nach bekannten Verfahren gesteuert, z.B. wie im Buch "Optoelectronics / Fiberoptics Applications Manual" 2nd Edition von Hewlett-Packard Company, Optoelectronics Division, Applications Engineering Staff, 1981, Seiten 2.1 bis 2.55 beschrieben.

Im oben beschriebenen Spektralphotometer können nicht nur weisse LEDs, sondern auch andersfarbige LEDs als Lichtquellen 13 eingesetzt werden. Dies ermöglicht unter anderem die Realisierung einer elektronisch schaltbaren UV Lichtquelle. Diese Lichtquelle wird realisiert, indem als Lichtquellen 13 mehrere weisse LEDs und zusätzlich UV LEDs eingebaut werden. UV LEDs emittieren haupsächlich Licht im ultravioletten Spektralbereich zwischen 350 nm und 420 nm. Die elektronische Ansteuerung und Regelung der LED Lichtquelle ist dabei so ausgelegt, dass die abgestrahlte Intensität jeder einzelnen LED 13 separat (oder gruppenweise) eingestellt werden kann. Dadurch kann im überlagerten, totalen Beleuchtungsspektrum der prozentuale Anteil von UV Licht gegenüber dem sichtbaren Lichtspektrum variiert werden. Dieses Verfahren ermöglicht eine variable, elektronisch steuerbare Fluoreszenzanregung von optischen Aufhellern in der zu messenden Probe. Diese Variante entspricht einem elektronisch steuerbarem UV Filter in der Beleuchtungsoptik, wobei jedoch keine mechanisch bewegten Komponenten erforderlich sind. Insbesondere können definierten Lichtarten (zum Beispiel die von der CIE definierten Normlichtarten) oder reale Lichtquellen mit unterschiedlichem UV Anteil im Messkopf simuliert werden, was die Messung von Farbwerten mit korrekter

Fluoreszenzbewertung von optischen Aufhellern ermöglicht. Die Berücksichtigung realer Beleuchtungsquellen in der Farbmesstechnik ergibt einen grossen Vorteil für digitale Visualisierungs- und Prüfanwendungen im Color Management Bereich.

Ein weiteres Beispiel eines Spektralphotometers beinhaltet die Realisierung eines zusätzlich auch noch präzise spektral messenden Dichtemesskopfs. Für diese zusätzliche Funktionalität werden zusätzlich zu den weissen LEDs noch (wenigstens) 3 farbige LEDs eingesetzt, welche nur im roten, grünen oder blauen Spektralbereich abstrahlen.

Bei der Dichtemessung mit einem (herkömmlichen) Spektralphotometer mit kontinuierlichem weissen Beleuchtungsspektrum limitiert das im spektralen Analysator durch die breitbandige Beleuchtung produzierte Streulicht den nutzbaren Dichtemessbereich. Mit dem optimierten Spektralphotometer kann dies vermieden werden, indem die Dichtemessung in 3 sequentiellen Messungen ausgeführt wird, wobei in den einzelnen Messungen nur die roten, grünen oder blauen LEDs eingeschaltet werden. Dadurch wird das Beleuchtungsspektrum effektiv auf den entsprechenden Dichtemessbereich beschränkt. Dies reduziert den Streulichtpegel und erhöht den linearen Messbereich des Spektralphotometers. Da die Messung spektral erfolgt, muss das Emissionsspektrum der einzelnen LEDs nicht an die gewünschte genaue Dichtefilterfunktion angepasst werden. Die gewünschte Dichtefiltercharakteristik wird in an sich bekannter Weise rechnerisch realisiert. Die elektronische Schaltung 310-340 kann dazu verschiedene vordefinierte Dichtefilterfunktionen als spektrale Wertetabellen enthalten, anhand welcher sie aus den spektralen Messsignalen die gewünschten Dichtewerte berechnet. Die digitale Filterung bzw. Berechnung der Dichtewerte kann selbstverständlich auch mittels eines Anwendungsprogramms erfolgen, welches in einem an das Densitometer angeschlossenen externen Rechner läuft.

Bei der Anwendung als reines Farbdensitometer kann natürlich die weisse Lichtquelle entfallen. Für diese Ausbildung als Densitometer wird auch gesonderter Schutz beansprucht.

Ein weiteres Beispiel des Spektralphotometers betrifft die Realisierung eines Spektralphotometers mit einer elektronisch variablen Lichtquelle.

Ein kontinuierliches Beleuchtungsspektrum über den sichtbaren und ultravioletten Spektralbereich kann auch durch eine Kombination von mehreren schmalbandig abstrahlenden LEDs erzielt werden. LEDs haben typische spektrale Halbwertsbreiten von 20 - 50 nm. Für ein über den sichtbaren Bereich kontinuierliches Spektrum von 400 - 700 nm müssen deshalb ca. 8 verschiedene LEDs in einer gemeinsamen Ringbeleuchtung analog Fig. 1-3 eingesetzt werden. Falls in einem bestimmten Spektralbereich keine schmalbandigen LEDs gefunden werden, können breitbandige LEDs in Kombination mit entsprechenden Filtern eingesetzt werden.

Bei dieser Weiterbildung kann das Beleuchtungsspektrum im Spektralphotometer über den gesamten spektralen Messbereich an eine gewünschte theoretische oder gemessene Beleuchtungsverteilung angepasst werden. Diese elektronisch einstellbare Lichtquelle ermöglicht korrekte Farbbewertung für allgemeine fluoreszierende Farben. Der Messablauf kann mit einer einzelnen Messung mit allen LEDs im eingeschalteten Zustand durchgeführt werden.

Diese Weiterbildung des Spektralphotometers ermöglicht auch die Realisierung eines einfachen kompakten Doppelmonochromator-Spektralphotometers. In dieser Anwendung wird durch entsprechende Ansteuerung der LEDs für jeden unabhängigen Spektralbereich der durch die verschiedenen LEDs gebildeten Lichtquelle sequentiell eine spektrale Messung ausgeführt. Diese Mehrfachmessungen ermöglichen niedrigste Streulichtpegel und eine allgemeingültige Bewertung von Fluoreszenzeffekten.

Die Farbmessung von Effektfarbschichten muss mit einer Multi-Winkel-Messgeometrie ausgeführt werden. Die Kontrolle und die Beschreibung des winkelabhängigen Farbverhaltens von Effektfarbschichten erfordert die Messung mit mindestens 3 charakteristischen (Beleuchtungs-)Winkeln, welche zum Beispiel in den Normen ASTM E 284 (15°, 45°,110°) und DIN 6175-2 (25°, 45°, 75°) spezifiziert sind.

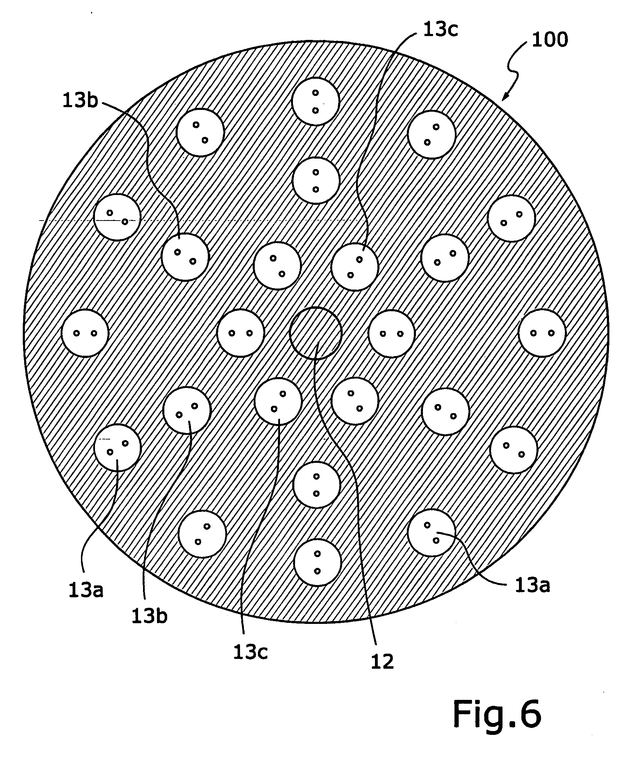

In den Figuren 5 und 6 ist ein weiteres Ausführungsbeispiel des Spektralphotometers skizziert, welches für Multi-Winkel-Messungen (hier im Beispiel 25°, 45° und 75°) ausgelegt ist.

Der Messkopf 100 ist im Prinzip gleich aufgebaut wie derjenige des Ausführungsbeispiels der Figuren 1-3, enthält aber nicht nur eine, sondern drei konzentrische ringförmige Anordnungen von Beleuchtungskanälen, welche mit 11a, 11b und 11c bezeichnet sind. Jeder Beleuchtungskanal enthält wiederum eine LED-Lichtquelle, eine Streuscheibe (optional), einen Filter (optional), eine Feldblende, eine Kondensorlinse, eine Abbildungslinse und einen Umlenkspiegel, wobei die denjenigen in Fig. 1 entsprechenden Teile in den Beleuchtungskanälen mit denselben Bezugszeichen, aber in Entsprechung zu ihrer Zugehörigkeit zu einer der drei ringförmigen Anordnungen von Beleuchtungskanälen 11a, 11b, 11c mit zusätzlichen Indices a, b und c gekennzeichnet sind. Alle übrigen Teile des Spektralphotometers sind gleich bzw. analog ausgebildet wie diejenigen des Ausführungsbeispiels der Figuren 1-4.

In jeder ringförmigen Anordnung von Beleuchtungskanälen 11a, 11b, 11c wird das Licht von mindestens einer weissen LED und eventuell noch zusätzlichen LEDs (einfarbig, UV) eingekoppelt und am Austritt unter einem definierten Winkel (hier im Beispiel 25°, 45° und 75°) auf das Messfeld gelenkt. Die Geometrie jeder ringförmigen Anordnung kann variabel ausgelegt werden, d.h. jede "ringförmige" Anordnung kann eine unterschiedliche Anzahl von Beleuchtungskanälen umfassen. Dementsprechend fällt für jeden Beleuchtungswinkel (relativ zur optischen Achse A) Licht aus einer oder aus mehreren (radialen) Richtungen auf die Probe. Die Messgeometrie ist so ausgelegt, dass kein optisches Übersprechen zwischen den Kanälen mit unterschiedlichem Beleuchtungswinkel inklusive der dazugehörenden LED-Lichtquellen stattfinden kann.

Wie beim Ausführungsbeispiel der Figuren 1-3 wird jede LED-Lichtquelle mit einem zweistufigen Abbildungssystem bestehend aus der Kondensorlinse und der Abbildungslinse in das gemeinsame Messfeld M abgebildet. Das optische Abbildungssystem beinhaltet ausserdem die Feldblende, welche die Grösse des Beleuchtungsflecks im Messfeld definiert und eventuell zusätzliche Filter und die Streuscheibe. Der Beleuchtungswinkel auf das Messfeld wird in jedem Beleuchtungskanal durch den Umlenkspiegel definiert. Der Durchmesser der Feldblende jedes Beleuchtungskanals muss entsprechend dem Cosinus des Beleuchtungswinkel angepasst werden, um ein gleichgrosses Messfeld zu beleuchten. Dies erfordert bei grossen Beleuchtungswinkeln kleine Blendendurchmesser und bedeutet Lichtverlust. Dieser Lichtverlust kann durch den Einsatz einer grösseren Anzahl LEDs in den entsprechenden Beleuchtungskanälen kompensiert werden

Die vorteilhafte Ausführungsform der Figuren 5-6 ermöglicht die Positionierung aller LED-Lichtquellen auf gleicher Höhe über dem Messfeld. Dies ermöglicht eine einfache Montage aller LEDs in Standardgehäusen auf der gemeinsamen Leiterplatte 300.

Ausserdem sind die beiden Linsen (Kondensorlinse und Abbildungslinse) in allen Beleuchtungskanälen auf gleicher Höhe über dem Messfeld realisiert. Dazu ist erforderlich, dass die Brennweiten der beiden Linsen in jedem Beleuchtungskanal auf die gegenseitigen Lagen der Beleuchtungskanäle abgestimmt werden.

Diese spezielle Anordnung bietet grundlegende Vorteile für die Herstellung des Spektralphotometers. Die normalerweise schwierige Justage eines Mehrkanalbeleuchtungssystems so, dass das Licht aller Beleuchtungskanäle sauber in das gemeinsame Messfeld trifft, kann mit dieser Anordnung einfach gelöst werden.

Die Kondorlinsen und die Abbildungslinsen aller Beleuchtungskanäle werden dazu, wie die Figur 5 zeigt, als körperlich integrierte (einstückige) Linsenarrays realisiert. Dies reduziert die Herstellungskosten, da nur je eine Komponente zum Beispiel aus Kunststoff im Spritzgussverfahren hergestellt werden muss. Ausserdem wird durch die Integration auf ein Element eine genaue gegenseitige Positionierung der Linsen erreicht. Zusätzlich sind in den Linsenarrays noch mechanische Positionierungsstrukturen (z.B. in Form von Vertiefungen) integriert, die mit entsprechenden Positionsstrukturen (z.B. in Form von Erhöhungen bzw. Zapfen) im Messkopfgehäuse zusammenarbeiten und somit einen justierfreien Zusammenbau des Messkopfs erlauben.

Das Gehäuse des Messkopfs 100 besteht im wesentlichen aus drei Teilen 10a, 10b und 10c, die je mit zapfenförmigen Positionsstrukturen 30a, 30b, 30c versehen sind.

Ein oberes Gehäuseteil 10a beinhaltet die Halterungen für die LED-Lichtquellen und ist mittels der Positionierungsstrukturen 30a auf das Kondensorlinsenarray 15a-15c gesteckt.

Ein Mittelteil 10b dient als Distanzhalter zum Linsenarray der Sammellinsen 16a-16c. Es ist mit den Positionierungsstrukturen 30b versehen und mittels dieser mit den beiden Linsenarrays 15a-15c und 16a-16c verbunden.

Ein mit den Positionierungsstrukturen 30c ausgestattetes unteres Gehäuseteil beinhaltet die Umlenkspiegel 19a-19c und ist mittels der Positionierungsstrukturen am Abbildungslinsenarray 16a-16c befestigt und gegenüber diesem ausgerichtet.

Für den Messablauf werden die LED-Lichtquellen kurz gepulst betrieben, so dass zeitlich sequentiell nur die zu je einem Beleuchtungswinkel gehörenden LEDs aktiviert werden und das entsprechende Reflektionsspektrum unter dem betreffenden Beleuchtungswinkel detektiert wird.

Das Beleuchtungssystem des Messkopfs ist so ausgelegt, dass mindestens ein Beleuchtungskanal das Messfeld unter einem Winkel von 45° beleuchtet. Für zusätzliche Beleuchtungskanäle werden idealerweise Beleuchtungswinkel entsprechend den Normen für Multi-Winkel-Farbmessgeräte (z. B. ASTM E 284 und DIN 6175-2) implementiert.

Für die Anwendung des Spektralphotometers in einem Druck- oder automatisierten Farbmesssystem muss eine kontaktlose Messgeometrie zwischen Messkopf und Probe realisiert werden. Die 45°/0° und Multi-Winkel-Messgeometrien sind wegen der grossen Beleuchtungswinkel sehr empfindlich auf Distanzänderungen. In bekannten Systemen, zum Beispiel gemäss der US-A 6198536, ist eine komplexe mechanische Konstruktion vorgesehen, die für einen konstanten Messabstand während des Messablaufs sorgt. Solche Konstruktionen sind aufwendig und nicht generell für Einbausensoren anwendbar.

Gemäss einem weiteren Aspekt der vorliegenden Erfindung wird eine im Messkopf integrierte optische Distanzmessung und eine numerische Korrektur der Messwerte zur Kompensation des Einflusses von Distanzschwankungen während dem Messbetrieb verwendet. Durch diese Kompensationstechnik werden deutlich grössere Grenzwerte für tolerierbare Distanzschwankungen erreicht, so dass eine einfachere mechanische Konstruktion für den Einbau des Sensors verwendet werden kann.

Eine erste Variante für eine im Messkopf integrierte Abstandsmessung ist in Figur 7 schematisch dargestellt.

Die optische Distanzmessung beruht auf einem trigonometrischem Messverfahren. Eine Änderung der Messdistanz verursacht wegen des grossen Beleuchtungswinkels einen lateralen Versatz des Beleuchtungsflecks gegenüber dem Messfeld des Sammelkanals. Dieser laterale Versatz erzeugt eine Änderung des Signalpegels und führt zu Messfehlern. Der laterale Versatz des Beleuchtungsflecks wird gemessen und zur numerischen Korrektur ausgewertet.

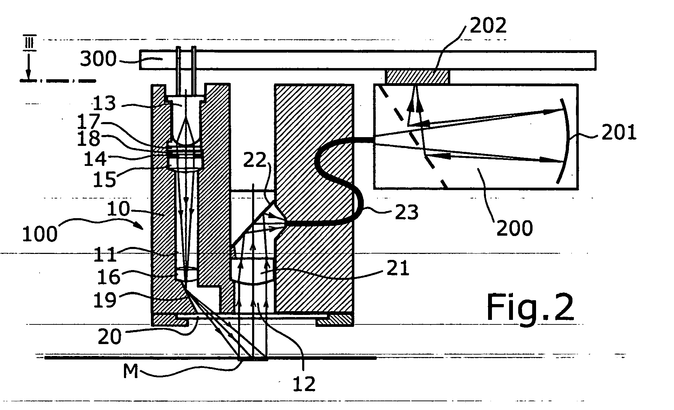

Der Sammelkanal 12 ist dazu so gestaltet, dass er eine Abbildung des Messfeldes auf einen optischen Sensor 26 ermöglicht. In der vorteilhaften Auslegung gemäss Figur 7 ist im Sammelkanal 12 ein auf der Messfeldseite telezentrisches Abbildungssystem vorgesehen. Eine erste Linse 21a erzeugt ein Zwischenbild im Sammelkanal. Eine Blende 24 ist im Brennpunkt der ersten Linse 21a angeordnet und limitiert den Erfassungswinkel des Messfelds. Nach der Blende 24 wird der optische Strahlengang mit einem Strahlteiler 25 aufgeteilt. Der grosse Anteil des Messlichts wird mit einer zweiten Linse 21b in die optische Faser 23 eingekoppelt und über diese dem Spektrometer 200 (Fig.2) zugeführt. Ein kleiner Anteil wird verwendet, um mittels des in der Bildebene des Messfeldes angeordneten optischen Sensors 26 den lateralen Versatz messen zu können. Der optische Sensor 26 kann zum Beispiel als zweidimensionaier Bildsensor (CCD Chip), als Position-Sensitive Detektor (PSD) oder als 4-Quadrantendetektor ausgebildet sein., wobei die Bestimmung des lateralen Versatzes mittels des Sensors 26 nach an sich bekannten Methoden erfolgt.

Während der Herstellung und Kalibration des Messkopfes bzw. des Spektralphotometers werden für bestimmte Versatzwerte die entsprechenden relativen Signaländerungen gemessen und gespeichert. Aus diesen Werten werden die Korrekturfaktoren für die Messwerte während dem Messbetrieb bestimmt. Dies kann mittels numerischer Interpolation zwischen den gespeicherten Werten ausgeführt werden. Die Korrektur der Messdaten muss nicht im Spektralphotometer selbst ausgeführt werden. Sie kann auch in einem externen Rechner durchgeführt werden, welcher nur die Messwerte vom Spektralphotometer übermittelt erhält.

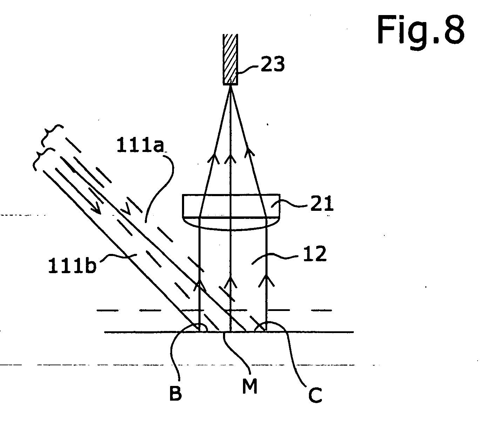

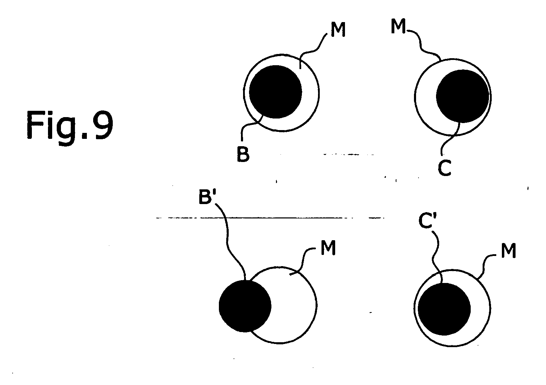

Eine alternative Implementierung des Distanz-Messprinzips wird durch den Einbau zweier Beleuchtungskanäle 111a und 111b ermöglicht, welche das Messfeld unter gleichem Winkel beleuchten, aber zwei laterale versetzte Beleuchtungsflecken erzeugen. Diese Variante ist in den Figuren 8-9 schematisch dargestellt. Mit M ist darin der vom Sammelkanal 12 erfasste Messfleck auf der auszumessenden Probe bezeichnet, B und C bzw. B' und C' bezeichnen die von den beiden Beleuchtungskanälen 111a und 111b bei zwei unterschiedlichen Distanzen erzeugten Beleuchtungsflecken.

Bei Distanzänderungen verschieben sich die beiden Beleuchtungsflecken B und C gegenüber dem Messfeld M. Wegen des lateralen Versatzes wird eine unterschiedliche Signaländerungen bei der Messung jedes einzelnen Beleuchtungskanals mit dem spektralen Sammelkanal erreicht. Das Verhältnis dieser beiden Messsignale ist eine charakteristische Grösse für die Distanzänderung. Dieses Verhältnis kann bei der Kalibration des Spektralphotometers in Funktion der Distanzänderung gemessen werden und einer entsprechenden Signalpegelkorrektur zugeordnet werden. Diese zweite Realisierung hat den Vorteil, dass die gleichen optischen Komponenten für die Farbund die Distanzmessung genutzt werden können.

Die Anwendung der Multi-Winkel-Ausführungsform des erfindungsgemässen Spektralphotometers in Color Management Anwendungen ermöglicht die Visualisierung und Simulation von winkelabhängigen Farb- und Reflektionseigenschaften eines speziellen Reproduktionsprozesses. Für diese Anwendung wird gemäss den Prinzipien des Color Managements ein Farbchart, welches den Farbraum eines Drucksystems gut repräsentiert, spektral mit dem erfindungsgemässen Multi-Winkel-Spektralphotometer eingemessen. Für jedes Messfeld werden die Remissionsspektren jedes Beleuchtungswinkels abgespeichert. Unter Verwendung eines spezifizierten Beobachters und eines Beleuchtungsspektrums können die Remissionsspektren nach bekannten Verfahren in Farbwerte (CIE XYZ oder L*a*b*) umgerechnet werden.

Aus den Multi-Winkel-Farbmessdaten und den dazugehörenden Systemsteuersignalen des Ziel-Geräts (z.B. Druckers) werden Multi-Winkel-Gerätefarbprofile erstellt. Für eine einfache Verwendung in Standard Color Management Systemen wird für jeden Messwinkel ein der ICC Definition entsprechendes Geräteprofil erstellt. Dieses Geräteprofil entspricht einer Tabelle, die den gemessenen Systemsteuersignalen die entsprechenden Farbwerte zuordnet. Fehlende Farbwerte werden duch Interpolation zwischen den Messwerten in der Tabelle bestimmt. Diese Mehrfachprofile können in einer ICC kompatible Bildbearbeitungssoftware, zum Beispiel Photoshop der Firma Adobe, geladen und verwendet werden, um die winkelabhängigen Farbeigenschaften eines digitalen Bildes oder Dokuments, welches gemäss einem spezifizierten Druckverfahren reproduziert wird, am Bildschirm darzustellen.

## Patentansprüche

1. Spektralphotometer mit einer in einem Messkopf (100) untergebrachten Beleuchtungsanordnung (13-19) für eine zu messende Probe, welche Beleuchtungsanordnung eine durch mehrere Leuchtdioden gebildete, im sichtbaren Spektralbereich im Wesentlichen eine kontinuierliche Beleuchtungslichtquelle aufweist, mit einer ebenfalls im Messkopf untergebrachten Sammelanordnung (12) zur Erfassung von einem Messfleck (M) der Probe ausgehendem Messlicht, und mit einer elektronischen Schaltung (310-340) zur Steuerung der Beleuchtungsanordnung und des Spektrometers sowie zur Verarbeitung der elektrischen Messsignale, wobei der Messkopf (100) für jede Leuchtdiode (13) einen separaten Beleuchtungskanal (11) aufweist, so dass das von jeder Leuchtdiode (13) ausgehende Licht unter einem definierten Einfallswinkel separat auf den Messfleck (M) der Probe gelenkt wird, und wobei die elektronische Schaltung (310-340) zur selektiven Steuerung der die Beleuchtungslichtquelle bildenden Leuchtdioden (13) ausgebildet ist,
**dadurch gekennzeichnet, dass**
das Spektralphotometer ein mit der Sammelanordnung optisch verbundenes Spektrometer (200) zur Zerlegung des von der Sammelanordnung erfassten Messlichts in seine spektralen Anteile und zur Erzeugung von entsprechenden elektrischen Messsignalen aufweist, dass die Beleuchtungslichtquelle mehrere weiß strahlende Leuchtdioden (13) umfasst, dass die elektronische Schaltung (310-340) so ausgelegt ist, dass die abgestrahlte Intensität jeder einzelnen Leuchtdiode (13) separat eingestellt werden kann, so dass ein überlagertes Beleuchtungsspektrum durch eine gleichzeitige Ansteuerung der LED's wird; und dass neben den weiß strahlenden Leuchtdioden (13) mehrere im UV-Bereich abstrahlende Leuchtdioden (13) vorgesehen sind, und dass der UV-Anteil des auf den Messfleck (M) der Probe fallenden Beleuchtungslichts entsprechend den gewünschten Messbedingungen über die elektronische Schaltung (310-340) durch entsprechende Ansteuerung der einzelnen Leuchtdioden (13) elektronisch einstellbar ist, wodurch der prozentuale Anteil von UV-Licht gegenüber dem sichtbaren Lichtspektrum variiert wird.

2. Spektralphotometer nach Anspruch 1, **dadurch gekennzeichnet, dass** neben der mindestens einen weiß strahlenden Leuchtdiode (13) zusätzliche Leuchtdioden (13) mit unterschiedlichen spektralen Emissionsspektren vorgesehen sind, und dass das Spektrum des auf den Messfleck (M) der Probe fallenden Beleuchtungslichts entsprechend den gewünschten Messbedingungen über die elektronische Schaltung (310-340) durch entsprechende Ansteuerung der einzelnen Leuchtdioden (13) elektronisch einstellbar ist.

3. Spektralphotometer nach einem der vorangehenden Ansprüche, **dadurch gekennzeichnet, dass** die Beleuchtungskanäle (11) des Messkopfs (100) in mindestens zwei, vorzugsweise drei oder mehr verschiedene Beleuchtungskanalanordnungen gruppiert sind, wobei die derselben Beleuchtungskanalanordnung angehörenden Beleuchtungskanäle die Probe unter jeweils demselben Einfallswinkel beleuchten und die Einfallswinkel für jede Beleuchtungskanalanordnung unterschiedlich sind, und dass die elektronische Schaltung (310-340) dazu ausgebildet ist, die Leuchtdioden (13) für die einzelnen Beleuchtungskanalanordnungen separat zu steuern, so dass die zu messende Probe selektiv unter verschiedenen Einfallswinkeln beleuchtbar ist.

4. Spektralphotometer nach einem der vorangehenden Ansprüche, **dadurch gekennzeichnet, dass** die Sammelanordnung (12) zur Erfassung des vom Messfleck (M) der Probe ausgehenden Messlichts ein telezentrisches Abbildungssystem (21 a, 21 b, 24) aufweist.

5. Spektralphotometer nach einem der vorangehenden Ansprüche, **dadurch gekennzeichnet, dass** der Messkopf (100) mit Erfassungsmitteln (25,26) für die Distanz zwischen dem Messkopf und der auszumessenden Probe versehen ist und dass die elektronische Schaltung (310-340) mit den Distanzerfassungsmitteln zusammenarbeitet und zur Erzeugung von der erfassten Distanz entsprechenden elektrischen Distanzkorrekturwerten für die bei der Ausmessung der Probe gewonnenen Messwerte ausgebildet ist.

6. Spektralphotometer nach einem der vorangehenden Ansprüche, **dadurch gekennzeichnet, dass** alle Beleuchtungskanäle (11) gleich aufgebaut sind und dass einander entsprechende optische Komponenten (15, 16) der einzelnen Beleuchtungskanäle in ein einstückiges Optikbauteil integriert sind.

7. Spektralphotometer nach Anspruch 6, **dadurch gekennzeichnet, dass** die zu je einem einstückigen Optikbauteil integrierten optischen Komponenten (15,16) der Beleuchtungskanäle (11) mittels mechanischer Positionsstrukturen (30a-30c) im Messkopf (100) ausgerichtet sind.

8. Verwendung des Spektralphotometers nach einem der vorangehenden Ansprüche als Einbausensor in einem automatisierten Farbmesssystem oder in einem automatisierten Farbdrucksystem.

9. Verwendung des Spektralphotometers nach Anspruch 3 zur farbmetrischen Ausmessung einer Probe unter verschiedenen Beleuchtungswinkeln und zur Erzeugung von entsprechenden Multi-Winkel-Messdaten.

10. Verwendung des Spektralphotometers nach Anspruch 3 zur farbmetrischen Ausmessung einer Probe unter verschiedenen Beleuchtungswinkeln und zur Erzeugung von Multi-Winkel-Geräteprofilen für ein Color Management System.

11. Farbdensitometer mit einer in einem Messkopf (100) untergebrachten Beleuchtungsanordnung (13-19) für eine zu messende Probe, welche Beleuchtungsanordnung eine durch mehrere Leuchtdioden gebildete Beleuchtungslichtquelle aufweist, mit einer ebenfalls im Messkopf untergebrachten Sammelanordnung (12) zur Erfassung von einem Messfleck (M) der Probe ausgehendem Messlicht, und mit einer elektronischen Schaltung (310-340) zur Steuerung der Beleuchtungsanordnung und des Fotoempfängers sowie zur Verarbeitung der elektrischen Messsignale, wobei der Messkopf (100) für jede Leuchtdiode (13) einen separaten Beleuchtungskanal (11) aufweist, so dass das von jeder Leuchtdiode (13) ausgehende Licht unter einem definierten Einfallswinkel auf den Messfleck (M) der Probe gelenkt wird, dass die Beleuchtungslichtquelle je mindestens eine rot, eine blau und eine grün strahlende Leuchtdiode (13) umfasst, wobei die elektronische Schaltung (310-340) zur selektiven Steuerung der die Beleuchtungslichtquelle bildenden Leuchtdioden (13) ausgebildet ist, dass der Fotoempfänger als Spektrometer (200) ausgebildet ist, welches das ihm zugeführte Messlicht in seine spektralen Anteile zerlegt und in den spektralen Anteilen entsprechende elektrische Messsignale umwandelt, und wobei die elektronische Schaltung (310-340) verschiedene vordefinierte Dichtefilterfunktionen als spektrale Wertetabellen enthält und zur Berechnung von Dichtewerten aus den spektralen Messsignalen und den spektralen Wertetabellen ausgebildet ist,
**dadurch gekennzeichnet, dass**
das Farbdensitometer einen mit der Sammelanordnung optisch verbundenen Fotoempfänger (200) zur Erzeugung von dem von der Sammelanordnung erfassten Messlicht entsprechenden elektrischen Messsignalen aufweist, dass neben mehreren weiß strahlenden Leuchtdioden (13) mehrere im UV- Bereich abstrahlende Leuchtdioden (13) vorgesehen sind, und dass der UV-Anteil des auf den Messfleck (M) der Probe fallenden Beleuchtungslichts entsprechend den gewünschten Messbedingungen über die elektronische Schaltung (310-340) durch entsprechende Ansteuerung der einzelnen Leuchtdioden (13) elektronisch einstellbar ist; und dass
die elektronische Schaltung (310-340) so ausgelegt ist, dass die abgestrahlte Intensität jeder einzelnen Leuchtdiode (13) separat eingestellt werden kann, wenn die mehreren Leuchtdioden (13) gleichzeitig als Beleuchtungslichtquelle verwendet werden, wodurch ein überlagertes Beleuchtungsspektrum erzeugt werden kann, wobei der prozentuale Anteil von UV-Licht gegenüber dem sichtbaren Lichtspektrum variiert wird.

## Claims

1. Spectrophotometer comprising an illumination arrangement (13-19) for a sample to be measured, which illumination arrangement is accommodated in a measurement head (100) and comprises an illumination light source which is formed by a plurality of light-emitting diodes and is essentially continuous in the visible spectral range, comprising a collecting arrangement (12) which is likewise accommodated in the measurement head and is designed to detect measurement light coming from a measurement spot (M) of the sample, and comprising an electronic circuit (310-340) for controlling the illumination arrangement and the spectrometer and for processing the electrical measurement signals, wherein the measurement head (100) comprises a separate illumination channel (11) for each light-emitting diode (13), so that the light coming from each light-emitting diode (13) is deflected at a defined angle of incidence separately onto the measurement spot (M) of the sample, and wherein the electronic circuit (310-340) is designed to selectively control the light-emitting diodes (13) which form the illumination light source,
**characterised in that**
the spectrophotometer comprises a spectrometer (200) which is optically connected to the collecting arrangement and which is designed to split the measurement light detected by the collecting arrangement into its spectral components and to generate corresponding electrical measurement signals, **in that**
the illumination light source comprises a plurality of white light-emitting diodes (13), **in that**
the electronic circuit (310-340) is configured in such a way that the emitted intensity of each individual light-emitting diode (13) can be adjusted separately, so that a superimposed illumination spectrum is generated by simultaneously actuating the LEDs, and **in that** in addition to the white light-emitting diodes (13), a plurality of light-emitting diodes (13) which emit in the UV range are provided, and **in that** the UV component of the illumination light impinging on the measurement spot (M) of the sample can be adjusted electronically according to the desired measurement conditions via the electronic circuit (310-340) by suitably actuating the individual light-emitting diodes (13), as a result of which the percentage amount of UV light relative to the visible light spectrum is varied.

2. Spectrophotometer according to claim 1, **characterised in that**, in addition to the at least one white light-emitting diode (13), additional light-emitting diodes (13) with different spectral emission spectra are provided, and **in that** the spectrum of the illumination light impinging on the measurement spot (M) of the sample can be adjusted electronically according to the desired measurement conditions via the electronic circuit (310-340) by suitably actuating the individual light-emitting diodes (13).

3. Spectrophotometer according to one of the preceding claims, **characterised in that** the illumination channels (11) of the measurement head (100) are grouped into at least two, preferably three or more different illumination channel arrangements, wherein the illumination channels belonging to the same illumination channel arrangement illuminate the sample at in each case the same angle of incidence, and the angles of incidence are different for each illumination channel arrangement, and **in that** the electronic circuit (310-340) is designed to control the light-emitting diodes (13) for the individual illumination channel arrangements separately, so that the sample to be measured can be illuminated selectively at different angles of incidence.

4. Spectrophotometer according to one of the preceding claims, **characterised in that** the collecting arrangement (12) for detecting the measurement light coming from the measurement spot (M) of the sample comprises a telecentric imaging system (21a, 21b, 24).

5. Spectrophotometer according to one of the preceding claims, **characterised in that** the measurement head (100) is provided with detection means (25, 26) for detecting the distance between the measurement head and the sample to be measured, and **in that** the electronic circuit (310-340) cooperates with the distance detection means and is designed to generate from the detected distance corresponding electrical distance correction values for the measurement values obtained during the measurement of the sample.

6. Spectrophotometer according to one of the preceding claims, **characterised in that** all the illumination channels (11) are of identical construction, and **in that** corresponding optical components (15, 16) of the individual illumination channels are integrated in a one-piece optical module.

7. Spectrophotometer according to claim 6, **characterised in that** the optical components (15, 16) of the illumination channels (11) which are integrated in each case to form a one-piece optical module are oriented in the measurement head (100) by means of mechanical positioning structures (30a-30c).

8. Use of the spectrophotometer according to one of the preceding claims as a built-in sensor in an automated colour measurement system or in an automated colour printing system.

9. Use of the spectrophotometer according to claim 3 for the colorimetric measurement of a sample under different illumination angles and for generating corresponding multi-angle measurement data.

10. Use of the spectrophotometer according to claim 3 for the colorimetric measurement of a sample under different illumination angles and for generating multi-angle device profiles for a colour management system.

11. Colour densitometer comprising an illumination arrangement (13-19) for a sample to be measured, which illumination arrangement is accommodated in a measurement head (100) and comprises an illumination light source which is formed by a plurality of light-emitting diodes, comprising a collecting arrangement (12) which is likewise accommodated in the measurement head and is designed to detect measurement light coming from a measurement spot (M) of the sample, and comprising an electronic circuit (310-340) for controlling the illumination arrangement and the photoreceiver and for processing the electrical measurement signals, wherein the measurement head (100) comprises a separate illumination channel (11) for each light-emitting diode (13), so that the light coming from each light-emitting diode (13) is deflected at a defined angle of incidence onto the measurement spot (M) of the sample, in that the illumination light source comprises in each case at least one red, one blue and one green light-emitting diode (13), wherein the electronic circuit (310-340) is designed to selectively control the light-emitting diodes (13) which form the illumination light source, in that the photoreceiver is designed as a spectrometer (200) which splits the measurement light supplied to it into its spectral components and converts corresponding electrical measurement signals in the spectral components, and wherein the electronic circuit (310-340) contains various predefined density filter functions as spectral value tables and is designed to calculate density values from the spectral measurement signals and the spectral value tables, **characterised in that**
the colour densitometer comprises a photoreceiver (200) which is optically connected to the collecting arrangement and which is designed to generate corresponding electrical measurement signals from the measurement light detected by the collecting arrangement, **in that**
in addition to a plurality of white light-emitting diodes (13), a plurality of light-emitting diodes (13) which emit in the UV range are provided, and **in that** the UV component of the illumination light impinging on the measurement spot (M) of the sample can be adjusted electronically according to the desired measurement conditions via the electronic circuit (310-340) by suitably actuating the individual light-emitting diodes (13), and **in that**
the electronic circuit (310-340) is configured in such a way that the emitted intensity of each individual light-emitting diode (13) can be adjusted separately if the plurality of light-emitting diodes (13) are used simultaneously as the illumination light source, as a result of which a superimposed illumination spectrum can be generated, wherein the percentage amount of UV light relative to the visible light spectrum is varied.

## Revendications

1. Spectrophotomètre, avec un dispositif d'éclairage (13 à 19) logé dans une tête de mesure (100), pour un échantillon à mesurer, ledit dispositif d'éclairage présentant une source de lumière d'éclairage sensiblement continue dans la plage du spectre de la lumière visible, formée par plusieurs diodes électroluminescentes, avec un dispositif collecteur (12) logé également dans la tête de mesure, pour détecter une lumière de mesure partant d'une tache de mesure (M) de l'échantillon, et avec un circuit électronique (310 à 340), pour commander le dispositif d'éclairage et le spectromètre, ainsi que pour traiter les signaux de mesure électriques, la tête de mesure (100) présentant, pour chaque diode électroluminescente (13), un canal d'éclairage (11) séparé, de manière que la lumière partant de chaque diode électroluminescente (13) soit déviée séparément, sous un angle d'incidence défini, sur la tache de mesure (M) de l'échantillon, et le circuit électronique (310 à 340) étant réalisé pour la commande sélective des diodes électroluminescentes (13) formant la source de lumière d'éclairage,
**caractérisé en ce que**
le spectrophotomètre présente un spectromètre (200), relié optiquement au dispositif collecteur, pour décomposer la lumière de mesure captée par le dispositif collecteur, en ses proportions spectrales et pour produire des signaux de mesure électriques correspondants, **en ce que**
la source de lumière d'éclairage comprend plusieurs diodes électroluminescentes (13) rayonnant dans le blanc, **en ce que**
le circuit électronique (310 à 340) est conçu de manière que l'intensité irradiée de chaque diode électroluminescente (13) puisse être réglée séparément, de manière qu'un spectre d'éclairage superposé puisse être produit au moyen d'une commande simultanée des DEL, et **en ce que**
outre les diodes électroluminescentes (13) rayonnant dans le blanc, plusieurs diodes électroluminescentes (13) rayonnant dans la plage des UV sont prévues, et **en ce que**
la proportion d'UV de la lumière d'éclairage incidente à la tache de mesure (M) de l'échantillon est réglable électroniquement de manière correspondante aux conditions de mesure souhaitées, par l'intermédiaire du circuit électronique (310 à 340), par une commande correspondante des différentes diodes électroluminescentes (13), moyennant quoi le pourcentage de lumière UV par rapport au spectre de lumière visible est modifié.

2. Spectrophotomètre selon la revendication 1, **caractérisé en ce que**, outre la au moins une diode électroluminescente (13) rayonnant dans le blanc, des diodes électroluminescentes (13) supplémentaires, ayant des spectres d'émission spectraux différents, sont prévues, et **en ce que** le spectre de la lumière d'éclairage incidente à la tache de mesure (M) de l'échantillon est réglable électroniquement de manière correspondante aux conditions de mesure souhaitées, par l'intermédiaire du circuit électronique (310 à 340), par une commande correspondante des différentes diodes électroluminescentes (13).

3. Spectrophotomètre selon l'une des revendications précédentes, **caractérisé en ce que** les canaux d'éclairage (11) de la tête de mesure (100) sont groupés en au moins deux, de préférence trois ou plus agencements de canaux d'éclairage différents, les canaux d'éclairage appartenant au même agencement de canaux d'éclairage éclairant l'échantillon sous chaque fois le même angle d'incidence, et les angles d'incidence étant différents pour chaque agencement de canaux d'éclairage, et **en ce que** le circuit électronique (310 à 340) est réalisé pour commander séparément les diodes électroluminescentes (13) pour les différents agencements de canaux d'éclairage, de manière que l'échantillon à mesurer puisse être éclairé sélectivement sous différents angles d'incidence.

4. Spectrophotomètre selon l'une des revendications précédentes, **caractérisé en ce que** le dispositif collecteur (12) présente un système de formation d'images (21 a, 21 b, 24) télécentrique pour détecter la lumière de mesure partant de la tache de mesure (M) de l'échantillon.

5. Spectrophotomètre selon l'une des revendications précédentes, **caractérisé en ce que** la tête de mesure (100) est munie de moyens de détection (25, 26) pour la distance entre la tête de mesure et l'échantillon à mesurer, et **en ce que** le circuit électronique (310 à 340) coopère avec les moyens de détection de distance et est réalisé pour engendrer des valeurs de correction de distance électriques correspondant à la distance détectée, pour les valeurs de mesure obtenues lors de la mesure de l'échantillon.

6. Spectrophotomètre selon l'une des revendications précédentes, **caractérisé en ce que** tous les canaux d'éclairage (11) sont de construction identique et **en ce que** des composants optiques (15, 16), se correspondant entre eux, des différents canaux d'éclairage sont intégrés dans un composant optique réalisé d'une seule pièce.

7. Spectrophotomètre selon la revendication 6, **caractérisé en ce que** les composants optiques (15, 16), intégrés chacun dans un composant optique réalisé d'une seule pièce, des canaux d'éclairage (11) sont orientés dans la tête de mesure (100) au moyen de structures de position (30a à 30c) mécaniques.

8. Utilisation du spectrophotomètre selon l'une des revendications précédentes, en tant que capteur intégré dans un système de mesure des couleurs automatisé ou dans un système d'impression en couleur automatisé.

9. Utilisation du spectrophotomètre selon la revendication 3, pour la mesure colorimétrique d'un échantillon sous différents angles d'éclairage et pour produire des données de mesure à angles multiples correspondantes.

10. Utilisation du spectrophotomètre selon la revendication 3, pour la mesure colorimétrique d'un échantillon sous différents angles d'éclairage et pour produire des profils d'appareil à angles multiples pour un Système de Gestion des Couleurs.

11. Chromodensitomètre avec un dispositif d'éclairage (13 à 19) logé dans une tête de mesure (100), pour un échantillon à mesurer, ledit dispositif d'éclairage présentant une source de lumière d'éclairage formée par plusieurs diodes électroluminescentes, avec un dispositif collecteur (12) logé également dans la tête de mesure, pour détecter une lumière de mesure partant d'une tache de mesure (M) de l'échantillon, et avec un circuit électronique (310 à 340), pour commander le dispositif d'éclairage et le photorécepteur, ainsi que pour traiter les signaux de mesure électriques, la tête de mesure (100) présentant, pour chaque diode électroluminescente (13), un canal d'éclairage (11) séparé, de manière que la lumière partant de chaque diode électroluminescente (13) soit déviée, sous un angle d'incidence défini, sur la tache de mesure (M) de l'échantillon, en ce que la source de lumière d'éclairage comprend respectivement au moins une diode électroluminescente (13) rayonnant dans le rouge, une rayonnant dans le bleu et une rayonnant dans le vert, le circuit électronique (310 à 340) étant réalisé pour la commande sélective des diodes électroluminescentes (13) formant la source de lumière d'éclairage, en ce que le photorécepteur est réalisé sous forme de spectromètre (200), décomposant la lumière de mesure lui étant amenée en ses proportions spectrales et la convertissant en des signaux de mesure électriques correspondant aux proportions spectrales, et le circuit électronique (310 à 340) contenant différentes fonctions de filtres de densité prédéfinies, sous forme de tableaux de valeurs spectraux, et étant réalisé pour le calcul de valeurs de densité à partir des signaux de mesure spectraux et des tableaux de valeurs spectraux,
**caractérisé en ce que**
le chromodensitomètre présente un photorécepteur (200) relié optiquement au dispositif collecteur, pour engendrer des signaux de mesure électriques correspondant à la lumière de mesure détectée par le dispositif collecteur, **en ce que**
outre plusieurs diodes électroluminescentes (13) rayonnant dans le blanc, plusieurs diodes électroluminescentes (13) rayonnant dans la plage des UV sont prévues, et **en ce que** la proportion d'UV de la lumière d'éclairage incidente à la tache de mesure (M) de l'échantillon est réglable électroniquement de manière correspondante aux conditions de mesure souhaitées, par l'intermédiaire du circuit électronique (310 à 340), par une commande correspondante des différentes diodes électroluminescentes (13) ; et **en ce que**
le circuit électronique (310 à 340) est conçu de manière que l'intensité irradiée de chaque diode électroluminescente (13) puisse être réglée séparément, lorsque lesdites plusieurs diodes électroluminescentes (13) sont utilisées simultanément en tant que source de lumière d'éclairage, moyennant quoi on peut produire un spectre d'éclairage superposé, le pourcentage de lumière UV par rapport au spectre de lumière visible étant modifié.
